# EUROPÄISCHE PATENTSCHRIFT

(11) **EP 4 555 236 B1**
(45) Veröffentlichungstag und Bekanntmachung des Hinweises auf die Patenterteilung: **27.05.2026**
(21) Anmeldenummer: 23741629.2
(22) Anmeldetag: 10.07.2023
(51) Int. Cl.: F16H 63/34, B60K 1/00, F16D 1/00

(54) **MULTIFUNKTIONALER WELLENADAPTER, SPERRVORRICHTUNG, ELEKTROMOTOR-ANTRIEBSEINHEIT UND FAHRZEUG**
MULTIFUNCTIONAL SHAFT ADAPTER, LOCKING DEVICE, ELECTRIC MOTOR DRIVE UNIT, AND VEHICLE
ADAPTATEUR D'ARBRE MULTIFONCTIONNEL, DISPOSITIF DE VERROUILLAGE, UNITÉ D'ENTRAÎNEMENT DE MOTEUR ÉLECTRIQUE, ET VÉHICULE

(30) Priorität: 15.07.2022 DE 102022207255
(43) Veröffentlichungstag der Anmeldung: 21.05.2025
(73) Patentinhaber: Schaeffler Technologies AG & Co. KG, 91074 Herzogenaurach (DE)
(72) Erfinder: FRITSCH, Karl Martin, 80687 München (DE); HENRICH, Jens, 80687 München (DE); WEIMAR, Jan, 80687 München (DE); KIEPER, Philip, 80687 München (DE)
(74) Vertreter: Schaeffler Technologies
(86) Internationale Anmeldenummer: PCT/EP2023/069082
(87) Internationale Veröffentlichungsnummer: WO 2024/013116

(56) Entgegenhaltungen:
- WO-A2-01/31760
- DE-A1- 102005 030 824
- DE-T2- 3 586 393

## Beschreibung

Die Erfindung betrifft einen multifunktionalen Wellenadapter für eine Sperrvorrichtung, eine Sperrvorrichtung mit einem solchen multifunktionalen Wellenadapter, eine Elektromotor-Antriebseinheit mit einer solchen Sperrvorrichtung sowie ein Fahrzeug mit einer solchen Elektromotor-Antriebseinheit.

Die im Rahmen dieser Offenbarung vorgeschlagene Sperrvorrichtung stellt eine Weiterentwicklung der in den deutschen Patentanmeldungen DE 10 2021 213 737 A1 und DE 10 2021 213 739 A1 beschriebenen Sperrvorrichtungen dar.

Eine der Erfindung zugrunde liegende Aufgabe ist es, eine verbesserte Sperrvorrichtung, insbesondere für ein Fahrzeug, bereitzustellen.

Diese Aufgabe wird durch einen gemäß Anspruch 1 vorgeschlagenen und unter Schutz gestellten multifunktionalen Wellenadapter gelöst.

Es wird ein multifunktionaler Wellenadapter für eine Sperrvorrichtung vorgeschlagen, welche zur Anbringung an eine Elektromotor-Antriebseinheit vorgesehen ist.

Der Wellenadapter ist dabei mit einer sperrbaren Welle der Elektromotor-Antriebseinheit verbindbar und dabei im Wesentlichen aus einem Kunststoff hergestellt, in welchem Kontaktierungsmittel zur Fremderregung eines mit der Welle verbundenen Rotors einer Synchronmaschine der Elektromotor-Antriebseinheit eingebettet sind und welcher zudem mit einem Formschlusselement zur Verbindung mit der Welle und Sperrung der Welle stoffschlüssig verbunden ist.

Der vorgeschlagene Wellenadapter ermöglicht einerseits eine Sperr- bzw. Verriegelungsfunktion der Sperrvorrichtung, denn er ist Teil des Sperrmechanismus der Sperrvorrichtung, und andererseits die besagte Fremderregung der Synchronmaschine.

In einer Ausführung umfassen die Kontaktierungsmittel zumindest zwei Schleifringe zur Kontaktierung mit einer zugeordneten Schleifbürste sowie zumindest eine dem jeweiligen Schleifring zugeordnete Leiterbahn, welche sich vom zugeordneten Schleifring durch den Kunststoff des Wellenadapters erstreckt.

In einer weiteren Ausführung ist durch den Wellenadapter ortsfest ein zumindest abschnittsweise metallisch ausgebildetes Sensorbauteil zur Interaktion mit einem zu einem Gehäuse der Sperrvorrichtung ortsfesten Signalgeber zur Positionserfassung des Rotors der Synchronmaschine aufgenommen. Somit ermöglicht der vorgeschlagene Wellenadapter auch die besagte Positionserfassung des Rotors der Synchronmaschine.

Es wird zudem eine Sperrvorrichtung für eine Elektromotor-Antriebseinheit nach Anspruch 4 vorgeschlagen. Die Sperrvorrichtung weist dabei einen Sperrmechanismus zur Sperrung einer sperrbaren Welle der Elektromotor-Antriebseinheit auf sowie einen elektrischen Antrieb zur Aktuierung des Sperrmechanismus, welcher neben dem Sperrmechanismus durch ein Gehäuse der Sperrvorrichtung aufgenommen ist.

Dabei ist - in einer Gebrauchslage der Sperrvorrichtung - durch das Gehäuse der Sperrvorrichtung zudem ein multifunktionaler Wellenadapter der zuvor beschriebenen Art aufgenommen, gegen dessen Formschlusselement ein weiteres Formschlusselement des Sperrmechanismus in einer Axial-Hubbewegung und längs zum Wellenadapter und zur Welle zur Sperrung der Welle aktuierbar ist.

Eine solche Sperrvorrichtung trägt vorteilhafterweise zur Reduktion von Bauteilen und somit Bauraum bei. Damit einhergehend lässt sich auch ein Montageaufwand vorteilhafterweise vereinfachen.

Der Sperrmechanismus umfasst dabei ein in einer Axial-Hubbewegung und längs zur Welle aktuierbares Formschlusselement, welches mit einem wellenseitigen Komplement innerhalb eines Formschlussbereichs zumindest abschnittsweise formschlüssig fügbar ist, um die Welle zu sperren.

Dieses aktuierbare Formschlusselement ist dabei in einem Zustand, stirnseitig am wellenseitigen Komplement anliegend, längs zur Welle mittels zumindest eines elastischen Kraftübertragungsmittels definiert gegen das wellenseitige Komplement einrastbar vorspannbar bzw. verspannbar.

Dabei stützt sich das aktuierbare Formschlusselement in einem Sperrzustand der Welle, in welchem das aktuierbare Formschlusselement und das wellenseitige Komplement im Formschlussbereich des Sperrmechanismus ineinandergreifen, gegen einen Gehäuseabschnitt einer Elektromotor-Antriebseinheit ab, an welchem der Sperraktuator bzw. die Sperrvorrichtung angebracht ist.

Der Sperrmechanismus weist dabei im Formschlussbereich und in Umfangsrichtung der Welle ein Bewegungsspiel zwischen dem aktuierbaren Formschlusselement und dem wellenseitigen Komplement auf, welches in Verbindung mit der besagten bzw. zuvor genannten Vorspannung / Verspannung des aktuierbaren Formschlusselements gegen das wellenseitige Komplement eine Einrastung des aktuierbaren Formschlusselements in das wellenseitige Komplement bzw. eine Fügung des aktuierbaren Formschlusselements mit dem wellenseitigen Komplement ermöglicht.

Unter einem wellenseitigen Komplement ist dabei ein wellenseitiges Gegenstück zum aktuierbaren Formschlusselement zu verstehen, welches im Formschlussbereich entsprechend komplementär zum aktuierbaren Formschlusselement ausgebildet bzw. ausgeformt ist. Dabei kann es sich um einen entsprechend ausgeformten Abschnitt der Welle selbst oder eines mit der Welle gefügten, separaten und entsprechend ausgeformten Elements handeln, welcher / welches mit dem aktuierbaren Formschlusselement formschlüssig zusammenwirkt.

Unter einem elastischen Kraftübertragungsmittel ist dabei ein mechanischer Energiespeicher zur elastischen Vorspannung / Verspannung des aktuierbaren Formschlusselements gegen das wellenseitige Komplement zu verstehen, etwa in Gestalt zumindest einer separaten Feder bzw. eines separaten Federelements und/oder in Gestalt zumindest eines in das aktuierbare Formschlusselement integrierten Federelementabschnitts.

Dieser Energiespeicher spannt das aktuierbare Formschlusselement gegen das wellenseitige Komplement vor, bis die Welle relativ zum aktuierbaren Formschlusselement eine geeignete Ausrichtung für einen Formschluss einnimmt bzw. erfährt. Sobald eine solche Ausrichtung vorliegt, drückt dieser Energiespeicher das aktuierbare Formschlusselement zur Einrastung in das wellenseitige Komplement, so dass die Welle gesperrt bzw. blockiert wird.

Zudem ist der Sperrmechanismus energiesparend aktuierbar, denn es bedarf weder zur besagten Aktuierung noch zur besagten Vorspannung / Verspannung aufzubringender hohen Stellkräfte. Bei der Fügung des aktuierbaren Formschlusselements mit dem wellenseitigen Komplement wird nämlich nur das aktuierbare Formschlusselement und nicht auch noch das zu sperrende Element eines Antriebsstrangs bewegt.

In einer Ausführung ist der elektrische Antrieb quer zur Welle angeordnet. Solch eine Queranordnung schafft vorteilhafterweise Bauraum zur Aufnahme der besagten Kontaktierungsmittel durch das Gehäuse der Sperrvorrichtung.

Unter quer ist dabei entweder eine orthogonale Anordnung des elektrischen Antriebs zur Welle zu verstehen oder aber eine Anordnung, bei welcher eine Längsasche des elektrischen Antriebs einen spitzen oder stumpfen Winkel mit einer Längsachse der sperrbaren Welle bildet.

Durch das Gehäuse der Sperrvorrichtung sind dabei zudem zumindest zwei Schleifbürsten zur besagten Fremderregung des mit der Welle verbundenen Rotors der Synchronmaschine der Elektromotor-Antriebseinheit aufgenommen.

In einer weiteren Ausführung sind die Schleifbürsten radial zur Welle angeordnet. Auch solch eine Radialanordnung begünstig eine kompakt bauende Ausführung der Sperrvorrichtung.

Dabei wird vorgeschlagen, die Schleifbürsten federvorgespannt gegen einen zugeordneten Schleifring der Kontaktierungsmittel anzulegen bzw. zu kontaktieren. Dadurch ist eine Nachführung von sich über die Zeit abnutzenden Schleifbürsten gegen die zugeordneten Schleifringe sichergestellt.

Es wird ferner eine Elektromotor-Antriebseinheit nach Anspruch 5 vorgeschlagen.

Zudem wird ein Fahrzeug nach Anspruch 6 vorgeschlagen.

Unter einem Fahrzeug ist dabei jede Art von Fahrzeug bzw. Kraftfahrzeug zu verstehen, welches elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung, wobei die Erfindung durch die Ansprüche bestimmt wird. Hierzu zeigen:

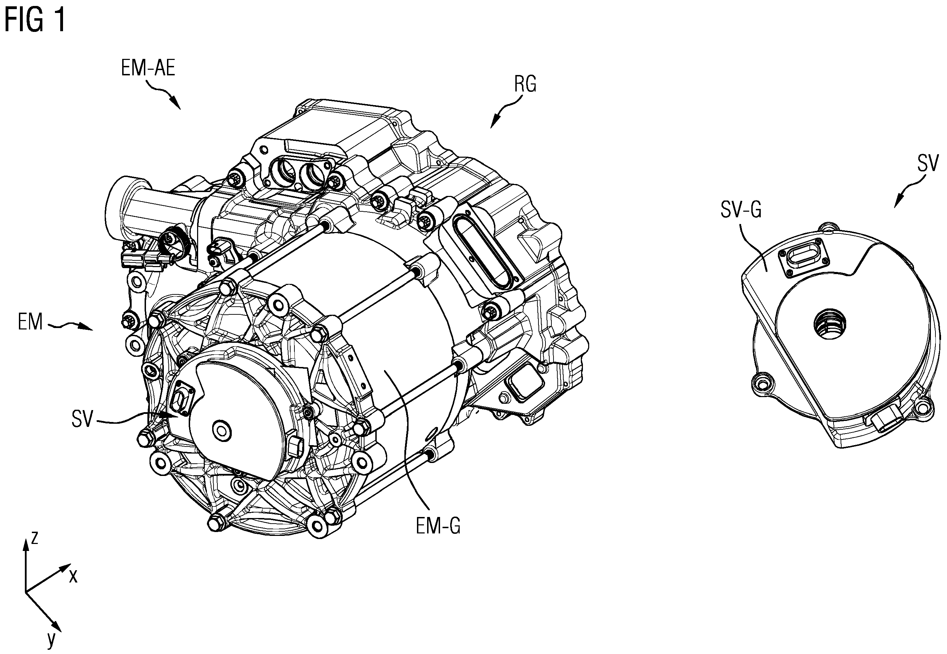

- Fig. 1: eine perspektivische Ansicht einer Elektromotor-Antriebseinheit mit einer vorgeschlagenen Sperrvorrichtung (links) sowie zusätzlich dazu eine separate, perspektivische und vergrößerte Ansicht eines Teils der Sperrvorrichtung (rechts);
- Fig. 2: die in Fig. 1 gezeigte Sperrvorrichtung in einer ebenen Schnittansicht;
- Fig. 3: einen Sperrmechanismus der Sperrvorrichtung nebst einer Anordnung von Kontaktierungsmitteln;
- Fig. 4: die in Fig. 3 gezeigte Anordnung des Sperrmechanismus und der Kontaktierungsmittel in einer perspektivischen Ansicht;
- Fig. 5: einen erfindungsgemäßen, multifunktionalen Wellenadapter der Sperrvorrichtung
- Fig. 6: einen Formschlussbereich zwischen einer sperrbaren Welle und der Sperrvorrichtung in einer Schnittansicht;
- Fig. 7: eine perspektivische und vergrößerte Ansicht des in Fig. 6 gezeigten Formschlussbereichs sowie
- Fig. 8: eine perspektivische Schnittansicht der Sperrvorrichtung.

Die vorgeschlagene Sperrvorrichtung SV ist an einer Elektromotor-Antriebseinheit EM-AE, insbesondere zum Antrieb eines Fahrzeugs angebracht. Die Elektromotor-Antriebseinheit EM-AE umfasst dabei einen Elektromotor EM in Gestalt einer fremderregten Synchronmaschine sowie ein daran angeschlossenes Reduktionsgetriebe RG. Die Sperrvorrichtung SV ist dabei an einem Gehäuse EM-G der Synchronmaschine angeordnet.

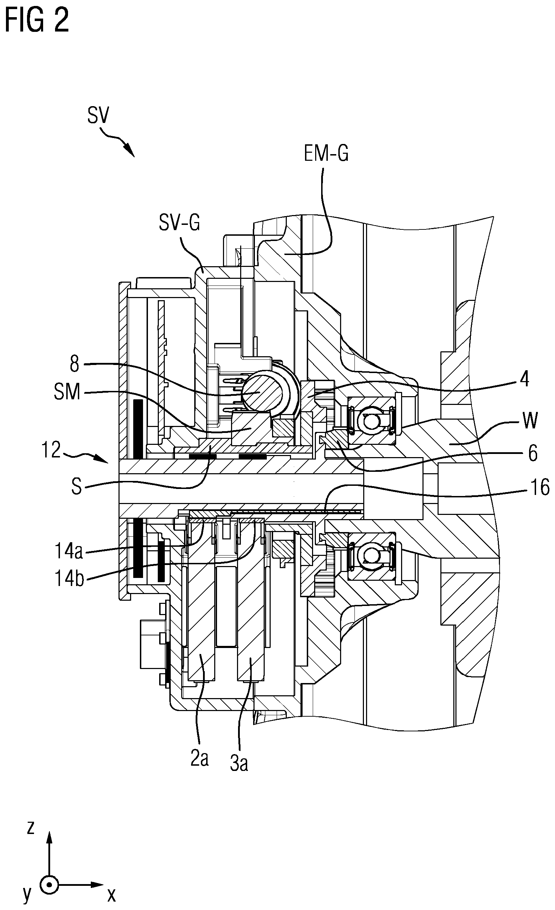

Die Sperrvorrichtung SV weist einen Sperrmechanismus sowie einen elektrischen Antrieb EA zur Aktuierung des Sperrmechanismus auf, welcher neben dem Antrieb EA durch ein Gehäuse SV-G der Sperrvorrichtung aufgenommen ist. Die Fig. 2 z.B. veranschaulicht dabei sehr schön, dass ein Gehäuseabschnitt EM-G der Synchronmaschine das Gehäuse SV-G der Sperrvorrichtung mit ausbildet.

Der Antrieb EA ist dabei quer - und orthogonal - zur Welle W bzw. Wellenachse X - X angeordnet. In einer hier nicht dargestellten Ausführungsform kann der Antrieb EA zur Welle auch derart angeordnet sein, dass eine Längsasche des Antriebs EA einen spitzen oder stumpfen Winkel mit der Längsachse X - X der Welle W bildet.

Der Antrieb EA treibt dabei eine Schraubradwelle 8 an, welche wiederum mit einem Zahnradsegment 10 einer Spindelmutter SM mit einem Innengewinde zusammenwirkt. Diese Spindelmutter SM ist dabei längs verschieblich mit einer Spindel S mit einem korrespondierenden Außengewinde gefügt, welche zusammen mit der Spindelmutter SM einen sog. Schraubentrieb bzw. ein sog. Schraubradgetriebe bildet, welcher eine Rotationsbewegung der Spindelmutter SM (links- oder rechtsdrehend) in eine Translationsbewegung der Spindelmutter SM entlang der Spindel S und in Längsrichtung X - X bzw. längs der Welle W wandelt. Die Spindel S ist dabei ortsfest zum Gehäuse SV-G angeordnet und stützt sich gegenüber dem Gehäuse SV-G ab (Fig. 2).

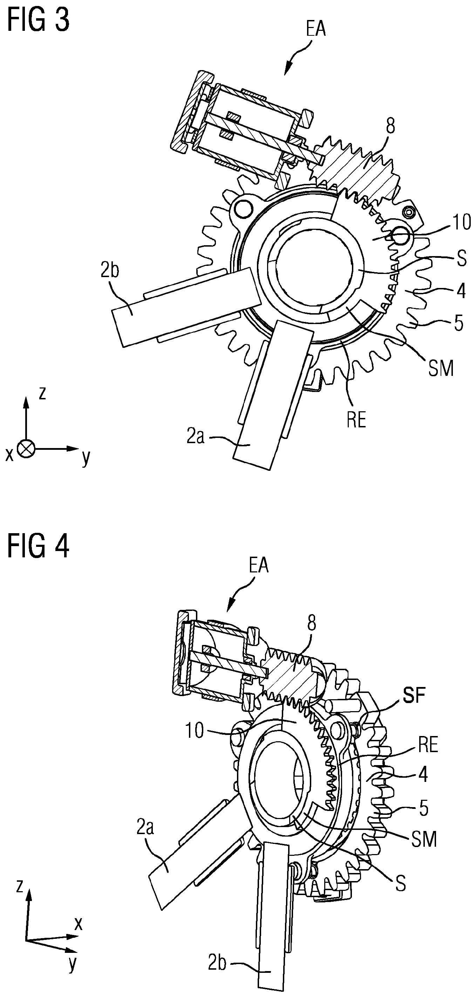

Wellenseitig ist die Spindelmutter SM über ein Ringelement RE, welches über ein Wälzlager durch die Spindelmutter SM selbst reibungsarm aufgenommen ist, und einzelne Federn, etwa in Gestalt von Schraubenfedern SF gegen ein in Längsrichtung X - X bzw. längs der Welle W aktuierbares Formschlusselement 4 elastisch vorgespannt (Fig. 3, Fig. 4).

Dieses Formschlusselement 4 ist somit über diese - etwa drei über den Umfang des Ringelements RE verteilt angeordnete - Schraubenfedern SF an einen die Axial-Hubbewegung des Formschlusselements 4 bewirkenden Bewegungsmechanismus der Sperrvorrichtung SV elastisch angebunden.

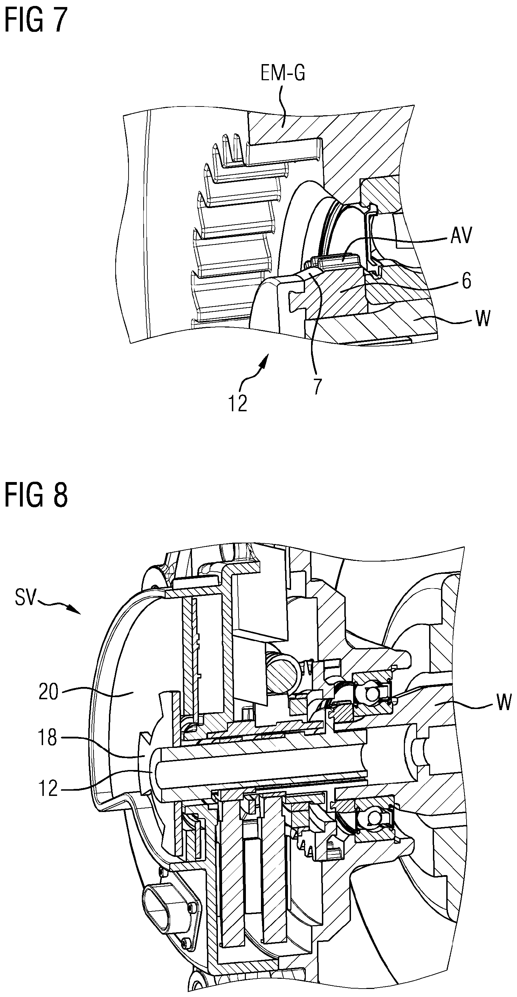

Dieses Formschlusselement 4 ist dabei metallisch sowie hochfest und in Gestalt eines geschlossenen umlaufenden, ringförmigen Elements mit einer Innenverzahnung IV und einer Außenverzahnung 5 ausgeführt. Während die Innenverzahnung IV in eine Außenverzahnung AV eines wellenseitigen und metallisch hochfesten Komplements 6 zur Sperrung der Welle W formschlüssig verfahrbar ist, wirkt die Außenverzahnung 5 stets mit einem komplementär ausgebildeten Abschnitt des Elektromotorgehäuses EM-G formschlüssig zusammen. Letzterer Formschluss gewährleistet eine Führung und Abstützung des Formschlusselements 4 gegenüber dem Elektromotorgehäuse EM-G. Diese Außenverzahnung 5 ermöglicht dabei eine günstige bzw. gleichmäßige Kraftverteilung über den Umfang des Formschlusselements 4 und zugleich eine günstige bzw. gleichmäßige Krafteinleitung in das Elektromotorgehäuse EM-G. Fig. 7 veranschaulicht dabei den am Elektromotorgehäuse EM-G zur Außenverzahnung 5 komplementär ausgeformten Abschnitt mit seiner Innenverzahnung. Dabei ist das Formschlusselement 4 der Einfachheit halber nicht dargestellt bzw. ausgeblendet bzw. weggelassen.

Im Sperrzustand der Welle W werden somit sowohl statische als auch dynamische Drehmomentlasten des Antriebsstrangs über diese Außenverzahnung 5 in das Elektromotorgehäuse EM-G eingeleitet.

Alternativ zur Außenverzahnung 5 kann auch eine Außenprofilierung des Formschlusselements 4 in Gestalt einzelner, radialer, klauenartiger Vorsprünge vorgesehen sein. Diesbezüglich wird auf die bereits eingangs erwähnten deutschen Patentanmeldungen DE 10 2021 213 737 A1und DE 10 2021 213 739 A1 verwiesen, welche dies beschreiben und veranschaulichen.

Die Sperrvorrichtung SV weist ferner einen multifunktionalen Wellenadapter 12 auf, welcher sich durch die Spindel S hindurch und bis in einen Bereich der Hohlwelle W hinein erstreckt. Dieser Wellenadapter 12 ist dabei im Wesentlichen aus einem Kunststoff hergestellt, in welchen zwei metallische Schleifringe 14a, 14b sowie eine dem jeweiligen Schleifring 14a, 14b zugeordnete metallische Leiter- bzw. Kontaktbahn 16 eingebettet sind. Die Leiterbahn 16 erstreckt sich dabei vom zugeordneten Schleifring 14a, 14b in Richtung der Hohlwelle W durch den Kunststoff des Wellenadapters 12 hindurch.

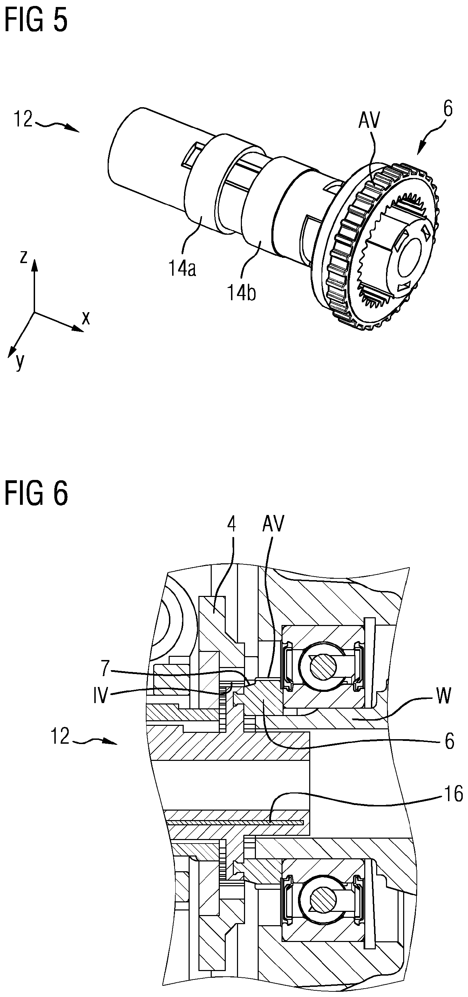

Des Weiteren ist der Kunststoff des Wellenadapters 12 mit dem wellenseitigen Komplement 6, welches in Gestalt eines metallischen Adapterrings ausgebildet ist, verspritzt bzw. stoffschlüssig verbunden. Fig. 6 veranschaulicht dabei beispielhaft einen ringförmigen Vorsprung des Adapterrings bzw. Formschlusselements 6, welcher stirnseitig am Adapterring 6 und dem Formschlusselement 4 zugewandt in Gestalt einer Schwalbenschwanzform ausgeformt und durch einen Kunststoffflansch des Wellenadapters 12 eingefasst ist. Dieser Adapterring 6 weist dabei eine zur Innenverzahnung IV komplementäre Außenverzahnung AV auf und zudem eine Innenprofilierung bzw. Innenverzahnung, über welche der Adapterring 6 und somit der Wellenadapter 12 auf eine entsprechend komplementär ausgebildete Außenprofilierung bzw. Außenverzahnung der Hohlwelle W aufgepresst ist.

Über den Adapterring 6 lässt sich die vorgeschlagene Sperrvorrichtung SV an unterschiedliche Wellendurchmesser vorteilhafterweise anpassen.

Radial zum Wellenadapter 12 angeordnet sind jeweils zwei Schleifbürsten 2a, 2b, 3a, 3b den beiden Schleifringen 14a, 14b zugeordnet und dabei durch das Gehäuse SV-G aufgenommen. Die Schleifbürsten 2a, 2b, 3a, 3b sind dabei federvorgespannt gegen die zugeordneten Schleifringe 14a, 14b angelegt bzw. kontaktiert. Dabei sind die einem Schleifring 14a, 14b zugeordneten und ein Paar bildenden Schleifbürsten 2a, 2b, 3a, 3b derart zueinander angeordnet, dass sie auf gleicher Höhe liegend einen Winkel einschließen (Fig. 3, Fig. 4).

Zum Zwecke einer Ausrichtung der beiden Formschlusselemente 4, 6 zueinander ist am Formschlusselement 6 stirnseitig und dem Formschlusselement 4 zugewandt ein zentrierend wirkender Verjüngungsabschnitt 7 angeformt (Fig. 6, Fig. 7). Im Falle eines Axialversatzes zwischen dem Formschlusselement 4 und dem Formschlusselement 6 bzw. der Hohlwelle W, kann die Innenverzahnung IV im Zuge einer Längsverschiebung des Formschlusselements 4 in Richtung X - X gegen diesen Verjüngungsabschnitt bzw. Zentrierungsabschnitt 7 anschlagen, um gegenüber der Außenverzahnung AV und somit der Hohlwelle W ausgerichtet zu werden. Das Formschlusselement 6 hat somit neben einer Sperrfunktion auch eine Zentrierungsfunktion, welche eine koaxiale Ausrichtung der beiden Formschlusselemente 4, 6 zueinander gewährleistet. Dadurch wird eine gleichmäßige Kraftverteilung über den Umfang der beiden Formschlusselemente 4, 6 im gefügten Zustand sichergestellt.

Die Sperrvorrichtung SV umfasst ferner eine bspw. induktiv wirkende Positionssensoranordnung zur Erfassung einer Position des mit der Welle W verbundenen Rotors der Synchronmaschine, um eine effiziente elektronische Kommutierung der Synchronmaschine zu ermöglichen. Fig. 8 veranschaulicht dabei beispielhaft eine Positionssensoranordnung im Bereich des äußeren Endes des Wellenadapters 12 bzw. des Endes des Wellenadapters 12, welches dem Wellenende abgewandt ist.

Dabei ist ein zum Gehäuse SV-G ortsfester und in eine Leiterplatte 20 integrierter Signalgeber mit einer Spulenanordnung vorgesehen, welcher mit einem zur Hohlwelle W ortsfesten Sensorbauteil in Gestalt eines metallischen, scheibenartigen Elements 18 zusammenwirkt. Dieses Elements 18, welches der Leiterplatte gegenüberliegend angeordnet ist, ist dabei durch den Kunststoff des Wellenadapters 12 sowie ortsfest zum Wellenadapter 12 aufgenommen. Dieses Element 18 weist dabei umfangsseitig einzelne radiale, klauenartige Vorsprünge auf, welche als solche eine Verstimmung eines auf sie einwirkenden Magnetfeldes bewirken. Zumindest diese radialen, klauenartigen Vorsprünge können dabei magnetisch, bspw. ferromagnetisch ausgeführt sein. In einem einfachen Ausführungsbeispiel ist dieses scheibenartige Element 18 gänzlich aus einem nichtmagnetischen Metall, etwa Aluminium gefertigt.

Alternativ dazu kann eine solche Positionssensoranordnung auch im Bereich der besagten Formschlusselemente 4, 6 bzw. wellenseitig vorgesehen sein.

In die Leiterplatte 20 ist dabei neben dem besagten Signalgeber auch eine Sensorelektronik für die Positionssensoranordnung sowie eine Motorelektronik zur Steuerung des elektrischen Antriebs EA integriert.

Die vorgeschlagene Sperrvorrichtung stellt eine kompakte, bauraumsparende sowie kostengünstige Lösung innerhalb eines Antriebsstrangs, insbesondere eines Fahrzeugs im Sinne einer Parksperre bzw. eines Sperraktuators dar, nach welcher der Sperrmechanismus in den Elektromotor EM und die Sperrvorrichtung in das Elektromotorgehäuse EM-G integriert ist.

Bei einem Fahrzeug mit einer solchen Sperrvorrichtung bedeutet dies, dass das Fahrzeug in einer Parksituation, in welcher das Fahrzeug stillsteht, etwa auf einen Fahrerwunsch hin, gesperrt bzw. blockiert werden kann.

Sofern in dieser Parksituation die Ausrichtung der Welle W nicht derart ist, als dass sie die Sperrung durch das Formschlusselement 4 ermöglicht, kann das Formschlusselement 4 in einem Zustand, in welchem es stirnseitig am wellenseitigen Komplement bzw. Formschlusselement 6 bzw. an der Außenverzahnung AV anliegt, über den besagten Schraubentrieb - gebildet durch die Spindel S und die Spindelmutter SM - und die besagten Schraubenfedern SF längs zur Welle W und mit einer definierbaren Kraft gegen die Welle W zur Einrastung vorgespannt bzw. verspannt werden. Wird die Welle W daraufhin nur etwas weiter verdreht bzw. gedreht, so kommt es zur Einrastung des Formschlusselements 4 mit dem Formschlusselement 6 und somit mit der Welle 6, sobald eine entsprechende Ausrichtung der Welle W erreicht wird, welche die Einrastung ermöglicht. Eine solche Weiter(ver)drehung der Welle W in der Parksituation kann dabei fahrzeugsystemseitig veranlasst werden.

Das besagte Bewegungsspiel zwischen den beiden Formschlusselementen 4, 6 und in Umfangsrichtung der Welle W ermöglicht aber auch folgendes Notfall-Szenario in einem Fehlerfall des Fahrzeugs, in welchem der Elektromotor EM der Elektromotor-Antriebseinheit EM-AE ausfällt.

Kommt es während des Fahrens zu einem Ausfall des Elektromotors EM und wird das Fahrzeug daraufhin auf einer Straße mit einer Steigung bis zum Stillstand abgebremst, dann ermöglicht die vorgeschlagene Sperrvorrichtung SV eine Sperrung bzw. Blockade des daraufhin aus dem Stillstand anrollenden Fahrzeugs, und zwar bis zu einer vom Bewegungsspiel abhängigen Höchstdrehgeschwindigkeit der Welle W bzw. Höchstgeschwindigkeit des Fahrzeugs.

Dabei wird das Formschlusselement 4 mit dem Formschlusselement 6 und somit mit der Welle W unter Ausnutzung des Bewegungsspiels und bis zur vom Bewegungsspiel abhängigen Höchstdrehgeschwindigkeit der Welle W bzw. Höchstgeschwindigkeit des Fahrzeugs zur Einrastung und somit das Fahrzeug zum Stillstand gebracht.

Indem das Formschlusselement 4 in einem Zustand, stirnseitig am Formschlusselement 6 bzw. an der Außenverzahnung AV anliegend, über den Schraubentrieb und die Schraubenfedern SF und längs zur Welle W mit einer definierbaren Kraft gegen die Welle W und bis zur Einrastung vorgespannt bzw. verspannt wird, erfolgt schließlich die Einrastung, sobald die Welle W eine entsprechende Ausrichtung zum Formschlusselement 4 erfährt.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Multifunktionaler Wellenadapter (12) für eine Sperrvorrichtung (SV), welche zur Anbringung an eine Elektromotor-Antriebseinheit (EM-AE) vorgesehen ist,
wobei der Wellenadapter (12) mit einer sperrbaren Welle (W) der Elektromotor-Antriebseinheit (EM-AE) verbindbar und dabei im Wesentlichen aus einem Kunststoff hergestellt ist, in welchem Kontaktierungsmittel zur Fremderregung eines mit der Welle (W) verbundenen Rotors einer Synchronmaschine der Elektromotor-Antriebseinheit (EM-AE) eingebettet sind und welcher zudem mit einem Formschlusselement (6) zur Verbindung mit der Welle (W) und Sperrung der Welle (W) stoffschlüssig verbunden ist.

2. Multifunktionaler Wellenadapter (12) nach Anspruch 1, wobei die Kontaktierungsmittel zumindest zwei Schleifringe (14a, 14b) zur Kontaktierung mit einer zugeordneten Schleifbürste (2a, 2b, 3a, 3b) sowie zumindest eine dem jeweiligen Schleifring (14a, 14b) zugeordnete Leiterbahn (16) umfassen, welche sich vom zugeordneten Schleifring (14a, 14b) durch den Kunststoff des Wellenadapters (12) erstreckt.

3. Multifunktionaler Wellenadapter (12) nach Anspruch 1 oder 2, wobei durch den Wellenadapter (12) ortsfest ein zumindest abschnittsweise metallisch ausgebildetes Sensorbauteil (18) zur Interaktion mit einem zu einem Gehäuse (SV-G) der Sperrvorrichtung ortsfesten Signalgeber zur Positionserfassung des Rotors der Synchronmaschine aufgenommen ist.

4. Sperrvorrichtung (SV) für eine Elektromotor-Antriebseinheit (EM-AE), wobei die Sperrvorrichtung (SV) einen Sperrmechanismus zur Sperrung einer sperrbaren Welle (W) der Elektromotor-Antriebseinheit (EM-AE) aufweist sowie einen elektrischen Antrieb (EA) zur Aktuierung des Sperrmechanismus, welcher neben dem Sperrmechanismus durch ein Gehäuse (SV-G) der Sperrvorrichtung (SV) aufgenommen ist,
wobei die Sperrvorrichtung (SV) an einer Elektromotor-Antriebseinheit (EM-AE) anordenbar ist und durch das Gehäuse (SV-G) der Sperrvorrichtung (SV) zudem ein multifunktionaler Wellenadapter (12) nach einem der vorhergehenden Ansprüche aufgenommen ist, gegen dessen Formschlusselement (6) ein weiteres Formschlusselement (4) des Sperrmechanismus in einer Axial-Hubbewegung (X - X) und längs zum Wellenadapter und zur Welle (W) zur Sperrung der Welle (W) aktuierbar ist.

5. Elektromotor-Antriebseinheit (EM-AE), insbesondere zum Antrieb eines Fahrzeugs mit einer Sperrvorrichtung (SV) nach Anspruch 4, welche an einem Gehäuse (EM-G) eines Elektromotors (EM) der Elektromotor-Antriebseinheit (EM-AE) angebracht ist.

6. Fahrzeug mit einer Elektromotor-Antriebseinheit (EM-AE) nach Anspruch 5.

## Claims

1. Multifunctional shaft adapter (12) for a locking device (SV) provided for fitting to an electric motor drive unit (EM-AE),
wherein the shaft adapter (12) can be connected to a lockable shaft (W) of the electric motor drive unit (EM-AE) and is in this instance substantially produced from a plastics material into which are embedded contacting means for external excitation of a rotor of a synchronous machine of the electric motor drive unit (EM-AE), said rotor being connected to the shaft (W), and which is additionally materially connected to a positive-locking element (6) for connection to the shaft (W) and locking of the shaft (W).

2. Multifunctional shaft adapter (12) according to Claim 1, wherein the contacting means comprise at least two slip rings (14a, 14b) for contacting with an associated brush (2a, 2b, 3a, 3b), and at least one conductor track (16), which is associated with the respective slip ring (14a, 14b) and which extends from the associated slip ring (14a, 14b) through the plastics material of the shaft adapter (12).

3. Multifunctional shaft adapter (12) according to Claim 1 or 2, wherein a sensor component (18) of metallic design, at least in some portion or portions, for interaction with a signal transmitter, fixed relative to a housing (SV-G) of the locking device, for position detection of the rotor of the synchronous machine is received in a fixed location by the shaft adapter (12).

4. Locking device (SV) for an electric motor drive unit (EM-AE), wherein the locking device (SV) has a locking mechanism for locking a lockable shaft (W) of the electric motor drive unit (EM-AE) and an electric drive (EA) for actuating the locking mechanism which in addition to the locking mechanism is received by a housing (SV-G) of the locking device (SV),
wherein the locking device (SV) can be arranged on an electric motor drive unit (EM-AE) and the housing (SV-G) of the locking device (SV) furthermore receives a multifunctional shaft adapter (12) according to one of the preceding claims, with respect to the positive-locking element (6) of which a further positive-locking element (4) of the locking mechanism can be actuated in an axial stroke movement (X - X) and longitudinally with respect to the shaft adapter and the shaft (W) to lock the shaft (W).

5. Electric motor drive unit (EM-AE), in particular for driving a vehicle with a locking device (SV) according to Claim 4, which is attached to a housing (EM-G) of an electric motor (EM) of the electric motor drive unit (EM-AE).

6. Vehicle having an electric motor drive unit (EM-AE) according to Claim 5.

## Revendications

1. Adaptateur d'arbre multifonctionnel (12) pour un dispositif de verrouillage (SV) conçu pour être fixé à une unité d'entraînement à moteur électrique (EM-AE), dans lequel l'adaptateur d'arbre (12) peut être raccordé à un arbre verrouillable (W) de l'unité d'entraînement à moteur électrique (EM-AE) et est sensiblement constitué d'un plastique dans lequel des moyens de contact sont incorporés pour une excitation externe d'un rotor d'une machine synchrone de l'unité d'entraînement à moteur électrique (EM-AE), ledit rotor étant raccordé à l'arbre (W), et lequel est en outre lié à un élément de complémentarité de forme (6) destiné au raccordement à l'arbre (W) et au verrouillage de l'arbre (W).

2. Adaptateur d'arbre multifonctionnel (12) selon la revendication 1, les moyens de contact comprenant au moins deux bagues collectrices (14a, 14b) pour une mise en contact avec un balai (2a, 2b, 3a, 3b) associé ainsi qu'au moins une piste conductrice (16) associée à la bague collectrice (14a, 14b) respective, laquelle s'étend depuis la bague collectrice (14a, 14b) associée à travers le plastique de l'adaptateur d'arbre (12).

3. Adaptateur d'arbre multifonctionnel (12) selon la revendication 1 ou 2, un composant capteur (18) réalisé au moins par sections en métal, destiné à interagir avec un émetteur de signaux fixe par rapport à un boîtier (SV-G) du dispositif de verrouillage pour la détection de position du rotor de la machine synchrone, étant logé de manière fixe dans l'adaptateur d'arbre (12).

4. Dispositif de verrouillage (SV) pour une unité d'entraînement à moteur électrique (EM-AE), le dispositif de verrouillage (SV) comportant un mécanisme de verrouillage pour verrouiller un arbre verrouillable (W) de l'unité d'entraînement à moteur électrique (EM-AE) ainsi qu'un entraînement électrique (EA) destiné à actionner le mécanisme de verrouillage, lequel est reçu, aux côtés du mécanisme de verrouillage, par un boîtier (SV-G) du dispositif de verrouillage (SV),
le dispositif de verrouillage (SV) pouvant être disposé sur une unité d'entraînement à moteur électrique (EM-AE), et un adaptateur d'arbre multifonctionnel (12) selon l'une quelconque des revendications précédentes étant en outre reçu par le boîtier (SV-G) du dispositif de verrouillage (SV), adaptateur contre l'élément à complémentarité de forme (6) duquel un autre élément à complémentarité de forme (4) du mécanisme de verrouillage peut être actionné selon un mouvement de levage axial (X - X) et longitudinalement par rapport à l'adaptateur d'arbre et à l'arbre (W) pour le verrouillage de l'arbre (W).

5. Unité d'entraînement à moteur électrique (EM-AE), en particulier pour l'entraînement d'un véhicule, comprenant un dispositif de verrouillage (SV) selon la revendication 4, lequel est fixé à un boîtier (EM-G) d'un moteur électrique (EM) de l'unité d'entraînement à moteur électrique (EM-AE).

6. Véhicule comprenant une unité d'entraînement à moteur électrique (EM-AE) selon la revendication 5.
